# EUROPÄISCHE PATENTSCHRIFT

(11) **EP 1 509 548 B1**
(45) Veröffentlichungstag und Bekanntmachung des Hinweises auf die Patenterteilung: **21.11.2007**
(21) Anmeldenummer: 03725182.4
(22) Anmeldetag: 09.05.2003
(51) Int. Cl.: C08B 15/06, C08L 1/08, D01F 2/02, D01F 2/24, D01F 2/00

(54) **VERFAHREN ZUR HERSTELLUNG VON CELLULOSECARBAMATFORMKÖRPERN**
METHOD FOR THE PRODUCTION OF CELLULOSE CARBAMATE MOULDED BODIES
PROCEDE DE FABRICATION DE CORPS MOULES A BASE DE CARBAMATE DE CELLULOSE

(30) Priorität: 24.05.2002 DE 10223174
(43) Veröffentlichungstag der Anmeldung: 02.03.2005
(73) Patentinhaber: Fraunhofer-Gesellschaft zur Förderung der angewandten Forschung e.V., 80686 München (DE)
(72) Erfinder: LOTH, Fritz, 14513 Teltow (DE); SCHAAF, Eckehart, 14513 Teltow (DE); WEIGEL, Peter, 14532 Kleinmachnow (DE); FINK, Hans-Peter, 14513 Teltow (DE); GENSRICH, H., Jürgen, 14513 Teltow (DE)
(86) Internationale Anmeldenummer: PCT/EP2003/004879
(87) Internationale Veröffentlichungsnummer: WO 2003/099871

(56) Entgegenhaltungen:
- DE-A- 19 635 246
- DE-A- 19 835 688
- DE-A- 19 910 105
- FR-A- 2 537 587

## Beschreibung

Die Erfindung betrifft ein Verfahren zur direkten Herstellung von Fasern, Folien, Perlen, Schwämmen und anderen Formkörpern aus Cellulosecarbamat, das durch Umsetzung von Cellulose mit Harnstoff bei erhöhter Temperatur und direkter Auflösung des Reaktionsproduktes in Natronlauge ohne zusätzliche Wasch- und Reinigungsoperationen erhalten wurde.

Verfahren zur Herstellung von Cellulosecarbamaten und deren Verformung nach Nassverformungsprozessen, zumeist ähnlich dem Viskoseprozeß, sind seit langem bekannt und haben in den letzten Jahren im Zusammenhang mit der Suche nach neuen Wegen zur umweltfreundlichen Herstellung von Celluloseregeneratfasern, als Alternative zum Viskoseprozeß, besondere Aufmerksamkeit erlangt. Dabei wird im Allgemeinen das Cellulosecarbamat (CC) als lagerfähiges Produkt in gesonderten Syntheseschritten hergestellt, gereinigt und isoliert, in verdünnten Natronlaugen gelöst, durch Formgebungselemente in Fällbädern verformt und gegebenenfalls alkalisch zu Regeneratcelluloseprodukten umgesetzt.

Die meisten Verfahren zur Herstellung von Cellulosecarbamat beruhen darauf, daß die Ausgangscellulose aktiviert und anschließend mit Harnstoff auf Temperaturen über 130°C erwärmt und umgesetzt wird. Dabei schmilzt der Harnstoff und zersetzt sich unter Abspaltung von Ammoniak zu Isocyansäure. Die Isocyansäure reagiert mit Hydroxylgruppen der Cellulose und es entsteht Cellulosecarbamat.

In der US 2 129 708 wurde die Herstellung von Cellulosecarbamat durch Erhitzen von Cellulose mit Harnstoff beschrieben, wobei die Cellulose mit einer Lösung aus Harnstoff und Alkalilauge getränkt, abgepreßt, getrocknet und auf Temperaturen von 120 bis 300°C erhitzt wurde. Nach Auswaschen der Nebenprodukte wurden alkalilösliche Cellulosecarbamate erhalten. Dieses Verfahren wurde weiterentwickelt, indem die Ausgangscellulose mit Natronlauge unterschiedlicher Konzentration vorbehandelt und damit aktiviert wurde (EP 402605). Auch die Vorbehandlung mit flüssigem Ammoniak als Aktivierungsschritt führt nach der DE 196 28 277 zu einer Erhöhung der Reaktivität und zu einer verbesserten Löslichkeit des Reaktionsproduktes Cellulosecarbamats in Natronlauge.

Die eigentliche Umsetzung der Reaktionsmischungen aus Cellulose und Harnstoff erfolgte im Trockenschrank oder ähnlichen Reaktoren bei Temperaturen über 120°C.

Beschrieben wurde auch die Verwendung von organischen Flüssigkeiten (Toluen, Xylen) als Wärmeüberträger und Schleppmittel für die azeotrope Trocknung der Reaktionsmischung (DE 196 35 473). Dadurch werden zwar deutliche Verbesserungen hinsichtlich des Wärmeübergangs erzielt, doch der Umgang mit diesen Lösungsmitteln, deren vollständige Entfernung aus der Reaktionsmischung und ihre Rückgewinnung sind aufwendig und mit zusätzlichen Kosten verbunden.

Die DE 198 35 688 wiederum lehrt, daß die Aktivierung der Cellulose durch Alkalilauge und anschließende Behandlung mit Alkohol erfolgt und die Umsetzung in einem Überschuß von geschmolzenem Harnstoff durchgeführt wird. Der Harnstoff wirkt dabei auch als Wärmeüberträger und verhindert lokale Überhitzungen und Verfärbungen des Produkts. Ein Nachteil dieser Verfahrensweise besteht in der zusätzlichen Verwendung von Alkohol und speziell von Methanol für die Aktivierung der Cellulose.

Der gleichzeitige Einsatz von C₁- bis C₉-Alkoholen mit Natronlauge zur Aktivierung der Cellulose und der nachfolgenden destillativen Entfernung von Wasser und Alkoholen vor der Reaktion mit Harnstoff bei höheren Temperaturen ist in der DE 199 40 393 beschrieben. Trotz der direkten destillativen Alkoholentfernung aus dem Reaktionsapparat sind anschließende aufwendige Reinigungsprozeduren des Cellulosecarbamats erforderlich.

Allen diesen bekannten Verfahren zur Herstellung von Cellulosecarbamat ist der Nachteil gemein, daß sie auf mehreren recht aufwendigen Verfahrensschritten in unterschiedlichen technischen Aggregaten beruhen und die Reaktionsprodukte anschließend durch z.B. aufwendige Wasch- und/oder Destillationsoperation zur Entfernung von Nebenprodukten und nicht umgesetzten Ausgangsstoffen gereinigt werden müssen, was die Aufarbeitung der Reinigungslösungen nötig macht.

Nach der WO 83/02279 wird zur Erzeugung von Formkörpern aus Cellulosecarbamat dieses in wässerigen Natronlaugelösungen gelöst und die Lösungen in sauren und/oder salzhaltigen Fällbädern verformt. Die Zersetzung der Cellulosecarbamat-Produkte zu Regeneratcellulose erfolgt dann in alkalischen Zersetzungsbädern.

Ausführlich beschrieben sind die Herstellungsbedingungen von textilen Fasern aus Cellulosecarbamat (u.a. DD 238984, DE 3271707). Auch andere Verformungsprodukte aus Cellulosecarbamat, wie Schwämme und Schwammtücher sind aus der DE 199 10 105 bekannt.

Alle diese Verfahren zur Verformung von Cellulosecarbamat sind Nassverfcrmungsverfahren. Sie verwenden gereinigte, d.h. aufwendig herzustellende reine Cellulosecarbamat-Produkte und lösen sie in verdünntem Alkali zu Verformungslösungen auf.

Ausgehend von den beschriebenen Nachteilen der bisherigen Verfahren liegt der Erfindung die Aufgabe zugrunde, ein Verfahren zur Herstellung von Cellulosecarbamat bereitzustellen, das technisch einfach und wirtschaftlich attraktiv ist. Insbesondere sollen die Verfahrensschritte der Aktivierung, Trocknung, Umsetzung, des Lösens des Reaktionsgutes und seiner Verspinnung verbessert und die Aufarbeitung vereinfacht werden.

Diese Aufgabe wird durch das verfahren mit den Merkmalen des Anspruchs 1 gelöst. Die weiteren abhängigen Ansprüche zeigen vorteilhafte Weiterbildungen auf. In Anspruch 18 wird die Verwendung des Verfahrens beschrieben.

Erfindungsgemäß wird ein Verfahren zur Herstellung von Cellulosecarbamatformkörpern ausgehend von aktivierter Cellulose oder Zellstoff bereitgestellt, das auf folgenden Verfahrensschritten beruht.
a) Zunächst wird ein Gemisch aus aktivierter Cellulose oder aktiviertem Zellstoff und Harnstoff in einem Mischaggregat unter scherender Behandlung hergestellt,
b) das Gemisch wird getrocknet
c) und anschließend bei einer Temperatur zwischen 120 und 180°C zum Reaktionsprodukt, dem Cellulosecarbamat, umgesetzt.
d) Das so erhaltene, unbehandelte und somit nicht aufgereinigte Reaktionsprodukt wird in verdünnter Alkalilauge aufgelöst,
e) die alkalische Lösung filtriert und/oder entlüftet und
f) anschließend zum Formkörper verformt.

Überraschenderweise verläuft die Auflösung des unbehandelten, nebenprodukthaltigen Reaktionsproduktes, dem Cellulosecarbamat, in verdünnter Natronlauge ohne Probleme ab, so daß sich je nach Zusammensetzung deutliche Vorteile gegenüber einer zwischengeschalteten Wäsche mit Wasser oder anderen Behandlungsmedien ergeben. Auch die Verformung in den verschiedenen bekannten Fällmedien und die Zersetzung der Verformungsprodukte in alkalischen Medien bereitet keine zusätzlichen Probleme. Es können alle bekannten Verformungsprodukte, wie Fasern, Folien, Perlen, Schwämme und Schwammtücher nach den ihnen eigenen Verfahrensweisen und Technologien hergestellt werden.

Bevorzugt erfolgt die vor Schritt a) durchführbare Aktivierung der Cellulose oder des Zellstoffs mit 3 bis 25%iger, bevorzugt 4 bis 20%iger Alkalilauge. Dabei kann der Restalkaligehalt der Cellulose oder des Zellstoffs durch Waschen sowie anschließendes Abpressen und/oder Zentrifugieren auf 0,1 bis 0,5, besonders bevorzugt auf 0,15 bis 0,3 mol Alkalihydroxid pro mol Anhydroglukose, gesenkt werden. Falls erforderlich, kann die gequollene Alkalicellulose einer Reife zur Einstellung des Durchschnitts-Polymerisationsgrades (DP) unterworfen werden.

Im Anschluß wird die feuchte alkalihaltige Cellulose zusammen mit dem Harnstoff in ein Mischaggregat überführt, wobei das Verhältnis von Harnstoff- zu Anhydroglykoseeinheiten zwischen 0,5 und 5, besonders bevorzugt zwischen 0,8 bis 3, bezogen auf die Molekularmassen, beträgt. Im Mischaggregat erfolgt unter Scherung eine intensive Vermischung der beiden Komponenten. Die so erhaltene Mischung wird anschließend bevorzugt durch Temperung und/oder Vakuumbehandlung getrocknet, wobei vorzugsweise dasselbe Aggregat wie für die Vermischung verwendet wird.

Die reaktive Umsetzung der beiden Komponenten, d.h. der Cellulose und des Harnstoffs, erfolgt im Anschluß bevorzugt bei Temperaturen zwischen 125 und 150°C. Die Reaktionszeit beträgt dabei vorzugsweise zwischen 30 und 240 min und bevorzugt zwischen 60 und 120 min. Dabei kann die reaktive Umsetzung unter Inertgas und/oder Vakuumbehandlung erfolgen.

Als Mischaggregate eignen sich besonders Kneter und/oder Intensivmischer mit Zwangsförderung. Dabei ist es besonders bevorzugt, daß die Verfahrensschritte a) bis c), d.h. die Scherung, die Trocknung und die reaktive Umsetzung im gleichen Mischaggregat durchgeführt werden, wobei sowohl der Kneter als auch der Intensivmischer verwendet werden kann. Alternativ ist es aber auch möglich, daß die Verfahrensschritte a) und b) in dem Intensivmischer mit Zwangsförderung durchgeführt werden, während Schritt c) in dem Kneter erfolgt.

Das Reaktionsprodukt wird anschließend bevorzugt auf unter 20°C, besonders bevorzugt im Bereich zwischen -10 bis +10°C gekühlt.

In einer vorteilhaften Weiterbildung des Verfahrens wird im Schritt d) eine 3 bis 10, besonders bevorzugt eine 5 bis 8%ige Alkalilauge verwendet. Zusätzlich ist es möglich, daß während des Auflösens Verstärkungsfasern und/oder Porenbildner zugesetzt werden. Das derart aufgelöste Reaktionsprodukt wird vorzugsweise anschließend filtriert und mittels Vakuumbehandlung entgast.

Der abschließende Verfahrensschritt der Formgebung erfolgt vorzugsweise in einem Fällbad. Die Verformung kann dabei auf die aus dem Stand der Technik bekannte Art und Weise durchgeführt werden.

Als weitere vorteilhafte Weiterbildungen des Verfahrens kann im Anschluß an Schritt e) der Formkörper alkalisch zu Regeneraten umgesetzt werden.

Das Verfahren ist für Zellstoff in gleicher Weise wie für Cellulose anzuwenden. Bei der Verwendung von Zellstoff kann beispielsweise dieser in eine Lösung aus 2 bis 10 Gew.-%iger Natronlauge und 20 bis 40 Gew.% Harnstoff getaucht und anschließend zentrifugiert und abgepreßt werden. Der alkalifeuchte und harnstoffhaltige Zellstoff wird anschließend in einen Kneter oder Intensivmischer überführt und unter intensiver Scherung, wie zuvor beschrieben, aktiviert. In der gleichen Vorrichtung wird die Mischung durch Temperaturerhöhung und/oder Anlegen eines Vakuums getrocknet und nach Erreichen einer Produkttemperatur zwischen 130 bis 140°C zur Umsetzung gebracht. Die Auflösung und die Verformung dieses Cellulosecarbamats in Anwesenheit der Neben- und Restprodukte aus der Umsetzung erfolgt in der zuvor beschriebenen Weise und erweist sich dabei ebenfalls als unproblematisch.

Verwendung findet das erfindungsgemäße Verfahren vorzugsweise bei der Herstellung von Fasern, Folien, Perlen, Schwämmen und Schwammtüchern. Dies soll jedoch lediglich als exemplarische Auswahl aus der Gruppe beliebiger Formkörper angesehen werden.

Anhand der folgenden Beispiele soll der erfindungsgemäße Gegenstand näher erläutert werden, ohne diesen auf die einzelnen Ausführungsbeispiele zu beschränken.

### Beispiel 1:

2500 g Alkalicellulose mit einem Cellulosegehalt von 32,8% und einem Alkaligehalt von 17% werden mit 25 1 entionisiertem Wasser gewaschen, zentrifugiert und in einer hydraulischen Presse bis auf einen Cellulosegehalt von 41% abgepreßt. Die feuchte Alkalicellulose wird bei Raumtemperatur in einem 51-Kneter mit 600 g festem kristallinem Harnstoff 30 min. geknetet. Anschließend wird die Temperatur des Kneters auf 140°C erhöht und das vorhandene Wasser abgezogen. Nach Erreichen einer Produkttemperatur von 130-140°C wird die Masse 105 min. weiter geknetet und anschließend aus dem Kneter ausgetragen. Zur Gewinnung des reinen CC wird die trockene krümelige Masse 1 mal mit essigsaurem Wasser und 3 mal nur mit entionisiertem Wasser bei einem Flottenverhältnis von 1 : 16 gewaschen, über einer Fritte abgesaugt und dann bei Raumtemperatur getrocknet. Dieses aufgelockerte und krümelige Produkt hatte einen Stickstoffgehalt von 2,8% und einen DP(_{Cuoxam}) von 260. Es wurde in einem Lösekessel mit Rührwerk bei -5 bis +2°C zu einer Lösung mit 7,5% Cellulose und 7,5% Natronlauge gelöst, die Lösung filtriert, unter Vakuum entlüftet und in ein Spinnbad aus 10% Schwefelsäure und 17% Natriumsulfat von 25°C zu Filamentgarnen mit 40 Kapillaren versponnen, gewaschen und getrocknet. Die erhaltenen Garne hatten bei einem Titer von 11 tex eine Festigkeit von 17 cN/tex bei einer Dehnung von 12%. Ihr Stickstoffgehalt betrug 2,1% und ihr DP_{(Cuoxam)} 255.

### Beispiel 2:

2500 g Alkalicellulose mit einem Cellulosegehalt von 32,8% und einem Alkaligehalt von 17% werden mit 25 l entionisiertem Wasser gewaschen, zentrifugiert und in einer hydraulischen Presse bis auf einen Cellulosegehalt von 43% abgepreßt. Die feuchte Alkalicellulose wird bei Raumtemperatur in einem 51-Kneter mit 600 g festem kristallinem Harnstoff 30 min. geknetet. Anschließend wird die Temperatur des Kneters auf 140°C erhöht und das vorhandene Wasser abgezogen. Nach Erreichen einer Produkttemperatur von 130-140°C wird die Masse 105 min. weiter geknetet und anschließend aus dem Kneter ausgetragen.

Die trockene krümelige Masse wird ungereinigt bei -5°C in 8%iger Natronlauge wie in Beispiel 1 beschrieben gelöst. Der Cellulosecarbamatgehalt betrug 8,6%. Das CC in der Lösung hatte einen Stickstoffgehalt von 2,6%. Die Lösung wird filtriert und entlüftet und in ein Spinnbad aus 8% Schwefelsäure und 15% Natriumsulfat von 25°C zu Filamentgarnen mit 40 Kapillaren versponnen, gewaschen und getrocknet. Die erhaltenen Garne hatten bei einem Titer von 11 tex eine Festigkeit von 16 cN/tex bei einer Dehnung von 11%. Ihr Stickstoffgehalt betrug 2,0% und ihr DP_{(Cuoxam)} 252.

### Beispiel 3:

648 g Fichte-Sulfit-Zellstoff mit einem DP_{(Cuoxam)} = 275 werden in einer Lösung enthaltend 30% Harnstoff und 6% Natronlauge 60 min. getaucht, zentrifugiert und auf einen Cellulosegehalt von 42% abgepreßt. Die Masse wird in einem 51-Kneter gegeben und bei 140°C getrocknet und nach Erreichen einer Produkttemperatur über 130°C 105 min. umgesetzt. Die Auflösung des Carbamats und seine Verformung erfolgte wie in Beispiel 2. Das Spinnbad enthielt 8% Schwefelsäure, 12% Natriumsulfat und 4% Ammoniumsulfat. Es hatte eine Temperatur von 15°C. Nach einer Behandlung in einem Regenerationsbad von 0,5% NaOH und 12% Natriumsulfat und der üblichen weiteren Nachbehandlung durch Wäsche und Trocknung hatten die Filamentgarne einen Stickstoffgehalt von 0,3%, eine Festigkeit von 18 cN/tex und eine Dehnung von 9% bei einem Titer von 11 tex.

### Beispiel 4:

Es wurde wie nach Beispiel 2 verfahren und aus der unbehandelten Rohlösung bei -2°C eine Mischung aus Cellulosecabamatlösung Baumwollfasern und Natriumcarbonat hergestellt. Auf 1 Teil Cellulose in Form des gelösten Cellulosecarbamates kamen dabei 0,5 Teile Baumwollfasern und 9,3 Teile Na₂CO₃ · 10H₂O, wobei die Korngröße des Natriumkarbonates rein zufällig war. Diese Mischung wurde bei 100°C 8 Stunden zu einem Schwamm koaguliert. Der Schwamm wurde mit Wasser ausgewaschen, mit Säure neutralisiert, nochmals mit glycerinhaltigem Wasser gewaschen und getrocknet. Nach dem Trocknen wurde die Wasseraufnahme bestimmt. Der Schwamm nahm 115% seines Trockengewichtes an Wasser auf. Der Stickstoffgehalt der porösen Matrix war 0,1%.

## Patentansprüche

1. Verfahren zur Herstellung von Cellulosecarbamatformkörpern mit folgenden Schritten:
a) Herstellung eines Gemisches aus aktivierter Cellulose oder aktiviertem Zellstoff und Harnstoff in einem Mischaggregat unter scherender Behandlung,
b) Trocknung des Gemisches,
c) reaktive Umsetzung bei Temperaturen zwischen 120 und 180 °C,
d) Auflösen des unbehandelten Reaktionsproduktes in verdünnter Alkalilauge
e) die alkalische Lösung filtriert und/oder entlüftet und
f) Verformung zum Formkörper.

2. Verfahren nach Anspruch 1,
**dadurch gekennzeichnet, dass** die Cellulose oder der Zellstoff mit 3 bis 25%iger, bevorzugt 4 bis 20%iger Alkalilauge aktiviert wird.

3. Verfahren nach Anspruch 2,
**dadurch gekennzeichnet, dass** der Restalkaligehalt der Cellulose oder des Zellstoffs durch Waschen sowie anschließendes Abpressen und/oder Zentrifugieren auf 0,1 bis 0,5, bevorzugt 0,15 bis 0,3 mol Alkalihydroxyd pro mol Anhydroglykose, gesenkt wird.

4. Verfahren nach mindestens einem der Ansprüche 1 bis 3,
**dadurch gekennzeichnet, dass** in Schritt a) das Verhältnis von Harnstoff- zu Anhydroglykoseeinheit zwischen 0,5 und 5, bevorzugt zwischen 0,8 bis 3, bezogen auf die Molekularmassen, beträgt.

5. Verfahren nach mindestens einem der Ansprüche 1 bis 4,
**dadurch gekennzeichnet, dass** die Trocknung der Reaktionsmischung durch Tempern und/oder Vakuumbehandlung erfolgt.

6. Verfahren nach mindestens einem der Ansprüche 1 bis 5,
**dadurch gekennzeichnet, dass** die reaktive Umsetzung bei Temperaturen zwischen 125 und 150°C erfolgt.

7. Verfahren nach mindestens einem der Ansprüche 1 bis 6,
**dadurch gekennzeichnet, dass** die Reaktionszeit in Schritt c) zwischen 30 und 240, bevorzugt zwischen 60 und 120 min liegt.

8. Verfahren nach mindestens einem der Ansprüche 1 bis 7,
**dadurch gekennzeichnet, dass** die reaktive Umsetzung unter Inertgas und/oder Vakuumbehandlung erfolgt.

9. Verfahren nach mindestens einem der Ansprüche 1 bis 8,
**dadurch gekennzeichnet, dass** als Mischaggregat ein Kneter und/oder ein Intensivmischer mit Zwangsförderung verwendet wird.

10. Verfahren nach Anspruch 9,
**dadurch gekennzeichnet, dass** die Schritte a) bis c) im gleichen Mischaggregat durchgeführt werden.

11. Verfahren nach Anspruch 9,
**dadurch gekennzeichnet, dass** die Schritte a) und b) in dem Intensivmischer mit Zwangsförderung und Schritt c) in dem Kneter durchgeführt werden.

12. Verfahren nach mindestens einem der Ansprüche 1 bis 11,
**dadurch gekennzeichnet, dass** das Reaktionsprodukt vor dem Auflösen unter 20°C, bevorzugt zwischen -10 und 10°C gekühlt wird.

13. Verfahren nach mindestens einem der Ansprüche 1 bis 12,
**dadurch gekennzeichnet, dass** Schritt d) eine 3 bis 10, bevorzugt 5 bis 8%ige Alkalilauge verwendet wird.

14. Verfahren nach mindestens einem der Ansprüche 1 bis 13,
**dadurch gekennzeichnet, dass** in Schritt d) verstärkungsfasern und/oder Porenbildner zugesetzt werden.

15. Verfahren nach mindestens einem der Ansprüche 1 bis 14,
**dadurch gekennzeichnet, dass** die Formgebung in Schritt f) in einem Fällbad erfolgt.

16. Verfahren nach mindestens einen der Ansprüche 1 bis 14, **dadurch gekennzeichnet, daß** die Formgebung in Schritt f) durch thermische Koagulation erfolgt.

17. Verfahren nach mindestens einem der Ansprüche 1 bis 16,
**dadurch gekennzeichnet, dass** der Formkörper alkalisch zu einem Regenerat umgesetzt wird.

18. Verwendung des Verfahrens nach mindestens einem der Ansprüche 1 bis 17 zur Herstellung von Fasern, Folien, Perlen, Schwämmen und Schwammtüchern.

## Claims

1. Method for the production of cellulose carbamate moulded articles with the following steps:
a) production of a mixture of activated cellulose or activated pulp and urea in a mixing unit with shearing treatment,
b) drying of the mixture,
c) reactive conversion at temperatures between 120 and 180°C,
d) dissolution of the untreated reaction product in diluted alkali lye,
e) the alkaline solution is filtered and/or deaerated and
f) shaping into the moulded article.

2. Method according to claim 1,
**characterised in that** the cellulose or pulp is activated with 3 to 25%, preferably 4 to 20% alkali lye.

3. Method according to claim 2,
**characterised in that** the residual alkali content of the cellulose or of the pulp is reduced by washing and by subsequent pressing out and/or centrifuging to 0.1 to 0.5, preferably 0.15 to 0.3 mol alkali hydroxide per mol anhydroglycose.

4. Method according to at least one of the claims 1 to 3,
**characterised in that**, in step a), the ratio of urea to anhydroglycose unit is between 0.5 and 5, preferably between 0.8 to 3, relative to the molecular masses.

5. Method according to at least one of the claims 1 to 4,
**characterised in that** drying of the reaction mixture is effected by tempering and/or vacuum treatment.

6. Method according to at least one of the claims 1 to 5,
**characterised in that** the reactive conversion is effected at temperatures between 125 and 150°C.

7. Method according to at least one of the claims 1 to 6,
**characterised in that** the reaction time in step c) is between 30 and 240, preferably between 60 and 120 min.

8. Method according to at least one of the claims 1 to 7,
**characterised in that** the reactive conversion is effected under inert gas and/or vacuum treatment.

9. Method according to at least one of the claims 1 to 8,
**characterised in that** a kneader and/or an intensive mixer with forced conveyance is used as mixing unit.

10. Method according to claim 9,
**characterised in that** the steps a) to c) are implemented in the same mixing unit.

11. Method according to claim 9,
**characterised in that** the steps a) and b) are implemented in the intensive mixer with forced conveyance and step c) in the kneader.

12. Method according to at least one of the claims 1 to 11,
**characterised in that** the reaction product is cooled before dissolving below 20°C, preferably between -10 and 10°C.

13. Method according to at least one of the claims 1 to 12,
**characterised in that**, in step d), a 3 to 10, preferably 5 to 8% alkali lye is used.

14. Method according to at least one of the claims 1 to 13,
**characterised in that**, in step d), reinforcing fibres and/or expanding agents are added.

15. Method according to at least one of the claims 1 to 14,
**characterised in that** shaping is effected in step f) in a regenerating bath.

16. Method according to at least one of the claims 1 to 14,
**characterised in that** shaping is effected in step f) by thermal coagulation.

17. Method according to at least one of the claims 1 to 16,
**characterised in that** the moulded article is converted into regenerated material in an alkaline manner.

18. Use of the method according to at least one of the claims 1 to 17,
for the production of fibres, films, beads, sponges and sponge-type cloths.

## Revendications

1. Procédé de fabrication de corps moulés en carbamate de cellulose comportant les étapes suivantes :
a) préparation d'un mélange constitué de cellulose activée ou de cellulose activée et d'urée dans un mélangeur sous cisaillement,
b) séchage du mélange,
c) conversion réactive à des températures comprises entre 120°C et 180 °C,
d) dissolution du produit de la réaction non traité dans une lessive alcaline diluée,
e) filtration et/ou désaérage de la solution alcaline, et
f) façonnage en corps moulés.

2. Procédé selon la revendication 1,
**caractérisé en ce que**
la cellulose est activée avec une lessive alcaline de 3 % à 25 %, de préférence de 4% à 20 %.

3. Procédé selon la revendication 2,
**caractérisé en ce que**
la teneur en alcali résiduel de la cellulose peut être abaissée en lavant puis en extrayant par pression et/ou en centrifugeant de 0,1 % à 0,5, de préférence de 0,15 à 0,3 mole d'hydroxyde d'alcali par mole d'anhydroglucose.

4. Procédé selon au moins l'une des revendications 1 à 3,
**caractérisé en ce qu'**
à l'étape a) le rapport entre l'unité urée et l'unité anhydroglucose est comprise entre 0,5 et 5, de préférence entre 0,8 et 3, par rapport aux masses moléculaires.

5. Procédé selon au moins l'une des revendications 1 à 4,
**caractérisé en ce que**
le mélange réactionnel est séché par étuvage et/ou traitement sous vide.

6. Procédé selon au moins l'une des revendications 1 à 5,
**caractérisé en ce que** la conversion réactive a lieu à des températures comprises entre 125°C et 150 °C.

7. Procédé selon au moins l'une des revendications 1 à 6,
**caractérisé en ce que**
le temps de réaction à l'étape c) est compris entre 30 et 240 minutes, de préférence entre 60 et 120 minutes.

8. Procédé selon au moins l'une des revendications 1 à 7,
**caractérisé en ce que**
la conversion réactive est réalisée sous gaz inerte et/ou avec un traitement sous vide.

9. Procédé selon au moins l'une des revendications 1 à 8,
**caractérisé en ce qu'**
on utilise, comme mélangeur, un malaxeur et/ou un mélangeur intensif.

10. Procédé selon la revendication 9,
**caractérisé en ce que**
les étapes a) à c) sont réalisées dans le même mélangeur.

11. Procédé selon la revendication 9,
**caractérisé en ce que**
les étapes a) et b) sont réalisées dans un mélangeur intensif à transport forcé et l'étape c) dans un malaxeur.

12. Procédé selon au moins l'une des revendications 1 à 11,
**caractérisé en ce que**
le produit réactionnel est refroidi avant la dissolution à une température inférieure 20 °C, de préférence comprise entre -10°C et 10 °C.

13. Procédé selon au moins l'une des revendications 1 à 12,
**caractérisé en ce qu'**
à l'étape d), on utilise une lessive alcaline de 3 % à 10 %, de préférence de 5 % à 8 %.

14. Procédé selon au moins l'une quelconque des revendications 1 à 13,
**caractérisé en ce qu'**
à l'étape d) on ajoute des fibres de renfort et/ou des agents porogènes.

15. Procédé selon au moins l'une des revendications 1 à 14,
**caractérisé en ce que**
le façonnage est réalisé à l'étape f) dans un bain de précipitation.

16. Procédé selon au moins l'une des revendications 1 à 14,
**caractérisé en ce que**
le façonnage est réalisé, à l'étape f) par coagulation thermique.

17. Procédé selon au moins l'une des revendications 1 à 16,
**caractérisé en ce que**
le corps moulé est converti en un produit régénéré par voie alcaline.

18. Utilisation du procédé selon au moins l'une des revendications 1 à 17, pour fabriquer des fibres, des feuilles, des perles, des éponges et des carrés à vaisselle.
